# EUROPEAN PATENT APPLICATION

(11) **EP 2 613 258 A1**
(43) Date of publication of application: **10.07.2013**
(21) Application number: 12162387.0
(22) Date of filing: 30.03.2012
(51) Int. Cl.: G06F 11/10

(54) **Automatic remapping in redundant array of independent disks and related raid**

(30) Priority: 08.01.2012 US 201213345742
(71) Applicant: Synology Incorporated, Taipei 103 (TW)
(72) Inventor: Tu, Tun-Hong, 242 New Taipei City (TW); Chen, Kuei-Huan, 236 New Taipei City (TW)
(74) Representative: Becker Kurig Straus

(57) **Abstract**

A method of performing automatic remapping in a redundant array of independent disks (10), hereinafter RAID (10), includes issuing a read command for performing a read operation to read data from a hard disk (130) of the RAID (10), and remapping a bad sector the data is located in to an unused good sector of the hard disk (130) when the bad sector is encountered during the read operation.

## Description

### Field of the Invention

The present invention relates to a method of performing automatic remapping in a Redundant Array of Independent Disks (RAID), a method of reporting a bad sector in a RAID, and related RAID with automatic remapping functionality according to the pre-characterizing clauses of claims 1, 7, and 12.

### Background of the Invention

RAID has the characteristic of being repairable. When a hard disk of the RAID is damaged, the RAID enters degrade mode. After the RAID enters degrade mode, the damaged hard disk can be changed out, and a repair procedure can be executed using a replacement hard disk.

Repair is performed by reading out correct data from a healthy hard disk of the RAID, then calculating lost data of the damaged hard disk according to the correct data, and finally writing the calculated data result to the replacement hard disk. One characteristic of RAID is that, when writing data to the RAID, data is simultaneously written to all hard disks in the RAID. The RAID establishes a data stripe having a number of columns that corresponds to the number of hard disks in the RAID. Data to be written is distributed into all columns of the stripe, then written into the hard disks corresponding thereto. In RAID levels 1 and above, one column of the stripe is reserved for storage of a parity bit. In RAID level 6 (RAID6), two columns are reserved. According to this writing characteristic, if data in any column of the stripe is lost, the RAID may calculate lost data according to other data and the parity bit(s) on the stripe. If the lost data happens to be the parity bit, the RAID can recalculate the parity bit. Thus, when a member hard disk of the RAID is damaged, although data on the damaged disk is lost, the RAID can read out data of the stripes to calculate the lost data corresponding to the damaged disk on the stripe, and write the calculated data to the replacement hard disk to repair the degraded RAID.

If the number of lost columns on a stripe exceeds the allowed number, e.g. one column for RAID1 or two columns for RAID6, the RAID cannot calculate the lost data. When repairing the RAID, because one column is already lost (the column corresponding to the damaged hard disk), if a bad sector is encountered in the process of reading data from the healthy hard disk, causing data loss of a second column, the stripe will be unable to repair the lost data, and the RAID will go from degrade mode to crash mode.

Once the RAID enters crash mode, the user is unable to read data from the RAID, namely the user loses all files he/she has stored in the RAID. The user's purpose in repairing the RAID is to restore protection to the data, and to lower the risk of files being corrupted or lost. Prior to repair, the user has not yet encountered corruption or loss of files. However, in the process of repairing the RAID, the user faces risk that all files will be lost, which is a type of risk the user should not be forced to accept.

### Summary of the Invention

This in mind, the present invention aims at providing a method of performing automatic remapping in a Redundant Array of Independent Disks (RAID), a method of reporting a bad sector in a RAID, and related RAID with automatic remapping functionality that prevent the RAID from entering crash mode when a bad sector is encountered during a read operation.

This is achieved by a method of performing automatic remapping in a Redundant Array of Independent Disks (RAID), a method of reporting a bad sector in a RAID, and related RAID with automatic remapping functionality according to claims 1, 7, and 12. The dependent claims pertain to corresponding further developments and improvements.

As will be seen more clearly from the detailed description following below, the claimed method of performing automatic remapping in a Redundant Array of Independent Disks (RAID) remaps a bad sector that data is located in to an unused good sector of a hard disk of the RAID when the bad sector is encountered during a read operation.

### Brief Description of the Drawings

In the following, the invention is further illustrated by way of example, taking reference to the accompanying drawings thereof:
FIG. 1 is a diagram illustrating an automatic remapping procedure according to an embodiment, and
FIG. 2 is a flowchart illustrating a method of performing automatic remapping in a RAID.

### Detailed Description

When a column of a data stripe cannot be repaired, only accuracy of a file to which the data stripe belongs is actually affected directly. In other words, a user should only lose one file, and should not lose all files when the repair process encounters a bad sector in a redundant array of independent disks (RAID). In the embodiments, the RAID function for repairing degrade mode is improved, so that the RAID is allowed not to enter crash mode even if a bad sector is read during the repair process, so as to eliminate unreasonable risk to the user. Additionally, a record is established indicating which sector the bad sector belongs to in a file system. After the RAID is repaired completely, the corrupted file is found according to the bad sector record, and the user is notified of the corrupted file. After completing repair, file system tools are used to check the file system for data and file system integrity.

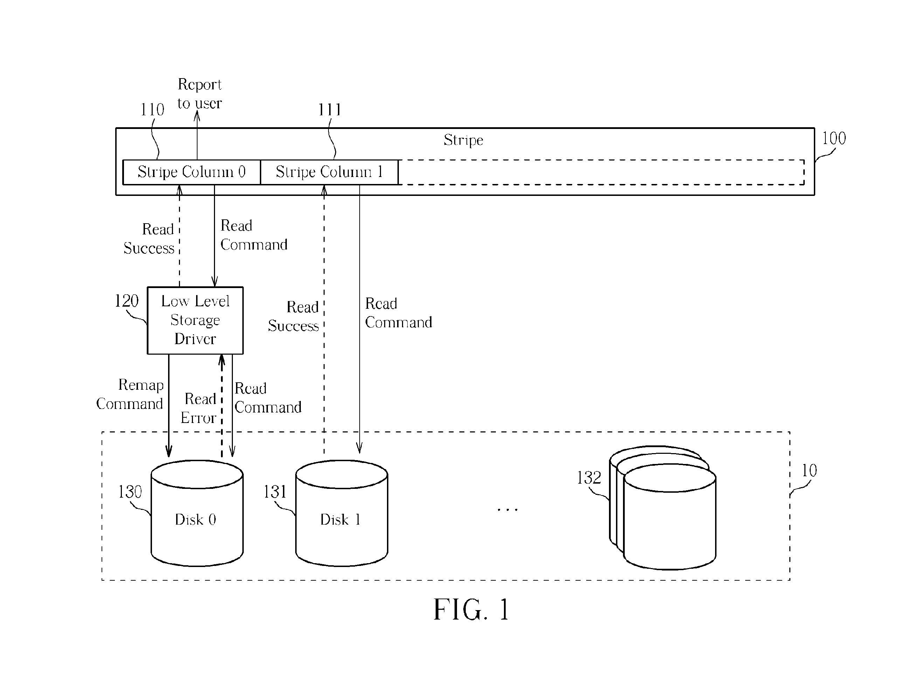

Please refer to FIG. 1, which is a diagram illustrating an automatic remapping procedure according to an embodiment. The automatic remapping procedure shown in FIG. 1 is illustrated in the context of a repair process, but the remapping procedure is also applicable to other RAID processes, such as standard input/output (I/O) and migration. Multiple hard disks 130, 131, 132 of a RAID 10 are read to form a data stripe 100 comprising stripe columns 110, 111. Stripe column 110 is reserved for storing data read from hard disk 130, and stripe column 111 is reserved for storing data read from hard disk 131. Number of stripe columns in data stripe 100 may be equal to number of hard disks in the RAID 10. A low level storage driver 120 translates commands received from a RAID controller (software or hardware) into commands issued to the hard disk 130, such as read commands or write commands. The hard disk 130 may store data, such as image files, document files, audio files, video files, and/or system files, or parity data, such as XOR parity data or other types of parity data (Galois field, Reed-Solomon).

As shown in FIG. 1, the RAID controller issues a read command to the low level storage driver 120 to obtain data from the hard disk 130 to put in the stripe column 110. The low level storage driver 120 then issues a read command to the hard disk 130 to read the data. The hard disk 130 issues a read error if the data cannot be read, which may be due to a bad sector. When the low level storage driver 120 receives the read error from the hard disk 130, the low level storage driver 120 issues a remap command (write command) to the hard disk 130 to remap an address from the bad sector to a new, good sector on the hard disk 130. After successful remapping, the low level storage driver 120 reports read success to the RAID controller, and the location of the bad sector is recorded. Because the RAID hierarchy believes that the read operation was successful, the RAID hierarchy does not put the RAID into crash mode. However, the RAID controller determines that the read operation encountered a bad sector, and the file to which the data belongs is corrupted. After the RAID is repaired completely, the corrupted file is found according to the recorded location of the bad sector, and the user is notified of the corrupted file. After completing repair, file system tools may also be used to analyze the file system to ensure integrity of data and the file system.

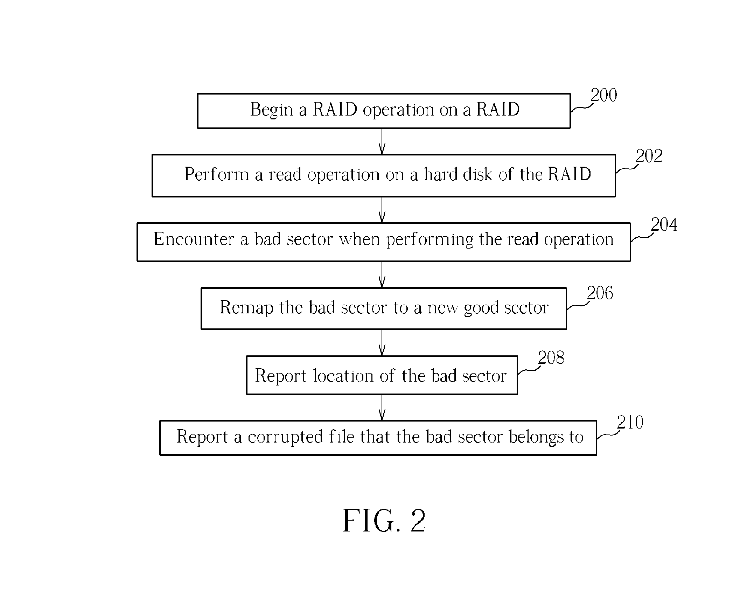

Please refer to FIG. 2, which is a flowchart illustrating a method of performing automatic remapping in a RAID. The method comprises the following steps:
- Step 200:: Begin a RAID operation on a RAID;
- Step 202:: Perform a read operation on a hard disk of the RAID;
- Step 204:: Encounter a bad sector when performing the read operation;
- Step 206:: Remap the bad sector to a new good sector;
- Step 208:: Report location of the bad sector to the RAID controller; and
- Step 210:: Report a corrupted file that the bad sector belongs to.

In step 200, a RAID controller begins a RAID operation on the RAID. The RAID may be in degraded mode. The RAID operation may be repair, normal I/O, migration, or another operation that requires issuance of a read command to a hard disk of the RAID. In step 202, the read operation is performed on the hard disk of the RAID. As shown in FIG. 1, a read command may be issued to the low level storage driver 120, which may be part of an operating system (OS) or firmware. In step 204, when performing the read operation, the hard disk may attempt to read from a sector, and determine that the sector comprises a bad sector. At this point, various actions may be taken, including the hard disk remapping the bad sector to a new (unused) good sector (step 206), and the hard disk and/or the low level storage driver reporting location of the bad sector to the RAID controller or OS (step 208) . The OS may determine which corrupted file (s) the bad sector belongs to based on the location of the bad sector, and report the corrupted file (s) to the user. Using the method shown in FIG. 2, the RAID does not enter crash mode when the bad sector is encountered when performing the read operation in degrade mode.

In step 206, remapping is performed to point the address of the bad sector to another location on the hard disk. Many remapping functions exist, and are well known in the art. For example, some remapping functions are performed by firmware of the hard disk.

Please note that, in the method shown in FIG. 2, certain steps may be omitted, and order of the steps may be altered, without departing from the scope of the embodiments. For example, steps 206, 208, and 210 describe different actions that may be taken in response to reading the bad sector in step 204. The method may not take all three actions. The method may perform remapping (step 206) without reporting the bad sector (step 208) or reporting the corrupted file(s) (step 210). Or, the method may report the bad sector without remapping the bad sector. The method may report the bad sector before performing remapping.

The method described above is suitable for all RAID levels. As long as the RAID is in degrade mode, the method shown in FIG. 1 and FIG. 2 may be used to prevent the RAID from entering crash mode when a bad sector is encountered during a read operation. This eliminates the risk of losing all of the user's data when only one file is corrupted.

## Claims

1. A method of performing automatic remapping in a redundant array of independent disks (10), hereinafter RAID (10), the method comprising:
issuing a read command for performing a read operation to read data from a hard disk (130) of the RAID (10);
**characterized by:**
remapping a bad sector the data is located in to an unused good sector of the hard disk (130) when the bad sector is encountered during the read operation.

2. The method of claim 1, **characterized in that** the RAID (10) is in degrade mode, the method further **characterized by:**
the RAID (10) not entering crash mode after the bad sector is remapped.

3. The method of claim 1, further **characterized by:**
reporting location of the bad sector.

4. The method of claim 3, further **characterized by:**
determining a file corresponding to the location of the bad sector; and
reporting the file as a corrupted file.

5. The method of claim 1, **characterized in that** the read operation is performed during a repair procedure for repairing the RAID (10).

6. The method of claim 1, **characterized in that** the read operation is performed during standard input/output or migration of the RAID (10).

7. A method of reporting a bad sector in a redundant array of independent disks (10), hereinafter RAID (10), the method comprising:
issuing a read command for performing a read operation to read data from a hard disk (130) of the RAID (10);
**characterized by:**
reporting location of a bad sector the data is located in when the bad sector is encountered during the read operation.

8. The method of claim 7, **characterized in that** the RAID (10) is in degrade mode, the method further **characterized by:**
the RAID (10) not entering crash mode after the bad sector is remapped.

9. The method of claim 8, further **characterized by:**
determining a file corresponding to the location of the bad sector; and
reporting the file as a corrupted file.

10. The method of claim 7, **characterized in that** the read operation is performed during a repair procedure for repairing the RAID (10).

11. The method of claim 7, **characterized in that** the read operation is performed during standard input/output or migration of the RAID (10).

12. A redundant array of independent disks (10), hereinafter RAID (10), with automatic remapping functionality, the RAID (10) comprising:
a plurality of hard disks (130, 131, 132) in RAID configuration;
**characterized by:**
firmware for remapping a bad sector of a hard disk (130) of
the plurality of hard disks (130, 131, 132) when the bad sector is encountered during a read operation of the hard disk (130).

13. The RAID (10) of claim 12, **characterized in that** the RAID (10) does not enter crash mode when the read operation is performed when the RAID (10) is in degrade mode.

14. The RAID (10) of claim 12, **characterized in that** the firmware reports location of the bad sector for determining a file to which the bad sector belongs.
